# EUROPÄISCHE PATENTANMELDUNG

(11) **EP 1 977 862 A2**
(43) Veröffentlichungstag der Anmeldung: **08.10.2008**
(21) Anmeldenummer: 08004139.5
(22) Anmeldetag: 06.03.2008
(51) Int. Cl.: B25B 27/02, B25B 33/00, F16C 11/06

(54) **Werkzeug zur Demontage eines Kugelgelenkverbinders**

(30) Priorität: 02.04.2007 DE 102007015883
(71) Anmelder: LuK Lamellen und Kupplungsbau Beteiligungs KG, 77815 Bühl (DE)
(72) Erfinder: Junchat, Guillaume, 45450 Fay-aux-Loges (FR); Constantin, Sebastien, 45000 Orleans (FR); Christiaens, Yannick, 45470 Loury (FR)

(57) **Zusammenfassung**

Werkzeug (200) zur Demontage eines Kugelgelenkverbinders (10) für ein Betätigungsgestänge, mit einem Kugelende (14) zur Verbindung mit einem ersten Gestängeteil, einem Pfannenteil (11) zur Verbindung mit einem zweiten Gestängeteil, wobei das Pfannenteil (11) eine Pfanne (12) und einen Pfannenkäfig (13) zum Einsetzen in die Pfanne enthält, wobei der Pfannenkäfig eine das Kugelende aufnehmende Vertiefung (15) hat, in die die Kugel (14) eingesetzt werden kann, wenn der Käfig äußerlich nicht eingeschlossen ist, wobei der Käfig Rückhaltemittel (16,19) hat, die mit einem ersten Gebilde (17) an dem Pfannenteil in Eingriff bringbar sind, um den Käfig in einer unvollständig eingesetzten Stellung relativ zu der Pfanne zu halten, wobei in dieser Stellung das Kugelende in die Vertiefung eingesetzt oder herausgenommen werden kann, und mit einem zweiten Gebilde (20) an dem Pfannenteil in Eingriff bringbar sind, um den Käfig (13) in einer vollständig eingesetzten Stellung in der Pfanne zu halten, wobei in dieser Stellung der Käfig (13) von dem Pfannenteil äußerlich eingeschlossen ist, um ein Lösen des Kugelendes aus der Vertiefung zu verhindern und somit das erste und zweite Gestängeteil zu verbinden, wobei das Werkzeug (200) eine zylindrische Öffnung (202) umfasst, deren Innendurchmesser geringfügig größer oder gleich einem einhüllenden Kreis (208) um äußere abgeschrägte Oberkanten der Rückhaltemittel (16,19) ist.

## Beschreibung

Die vorliegende Erfindung betrifft ein Werkzeug und ein Verfahren zur Demontage eines Kugelgelenkverbinders nach den Oberbegriffen der unabhängigen Ansprüche.

Aus der EP 1 614 911 ist ein Kugelgelenkverbinder für ein Betätigungsgestänge bekannt, der eine werkzeuglose Montage erlaubt. Bei der Demontage des Kugelgelenkverbinders kann das Problem auftauchen, dass Teile, die eine formschlüssige Verbindung nach Art einer Clipsverbindung herstellen, beschädigt werden können.

Eine Aufgabe der vorliegenden Erfindung ist es daher, ein Mittel anzugeben, das ein beschädigungsfreies Lösen der Kugelgelenkverbindung erlaubt.

Dieses Problem wird gelöst durch ein Werkzeug zur Demontage eines Kugelgelenkverbinders für ein Betätigungsgestänge, mit einem Kugelende zur Verbindung mit einem ersten Gestängeteil, einem Pfannenteil zur Verbindung mit einem zweiten Gestängeteil, wobei das Pfannenteil eine Pfanne und einen Pfannenkäfig zum Einsetzen in die Pfanne enthält, wobei der Pfannenkäfig eine das Kugelende aufnehmende Vertiefung hat, in die die Kugel eingesetzt werden kann, wenn der Käfig äußerlich nicht eingeschlossen ist, wobei der Käfig Rückhaltemittel hat, die mit einem ersten Gebilde an dem Pfannenteil in Eingriff bringbar sind, um den Käfig in einer unvollständig eingesetzten Stellung relativ zu der Pfanne zu halten, wobei in dieser Stellung das Kugelende in die Vertiefung eingesetzt oder herausgenommen werden kann, und mit einem zweiten Gebilde an dem Pfannenteil in Eingriff bringbar sind, um den Käfig in einer vollständig eingesetzten Stellung in der Pfanne zu halten, wobei in dieser Stellung der Käfig von dem Pfannenteil äußerlich eingeschlossen ist, um ein Lösen des Kugelendes aus der Vertiefung zu verhindern und somit das erste und zweite Gestängeteil zu verbinden, wobei das Werkzeug eine zylindrische Öffnung umfasst, deren Innendurchmesser geringfügig größer oder gleich einem einhüllenden Kreis um äußere abgeschrägte Oberkanten der Rückhaltemittel ist.

Umfasst der Kugelgelenkverbinder einen Käfig, der auf der Außenseite des Pfannenteiles gebildet ist, so ist vorzugsweise vorgesehen, dass sich von der zylindrischen Öffnung radiale Ausnehmungen zur Aufnahme des Käfigs erstrecken. Radiale Stege des Käfigs werden durch die Ausnehmungen aufgenommen, wobei gleichzeitig für eine Zentrierung des Werkzeuges und eine seitliche Führung, die ein versehentliches Abgleiten verhindert, bewirkt wird.

Vorzugsweise ist weiter vorgesehen, dass die zylindrische Öffnung in einen zylindrischen Aufsatzkörper eingebracht ist, wobei der Aufsatzkörper vorzugsweise an einem Griffstück angeordnet ist. Dies ermöglicht eine einfache manuelle Handhabung des Werkzeuges. Alternativ ist vorgesehen, dass die zylindrische Öffnung in eine Platte eingebracht ist, wodurch sich dieses auch bei geringem Bauraum in axialer Richtung des Kugelgelenkverbinders benutzen lässt.

Das eingangs genannte Problem wird auch gelöst durch ein Verfahren zur Demontage eines Kugelgelenkverbinders für ein Betätigungsgestänge, mit einem Kugelende zur Verbindung mit einem ersten Gestängeteil, einem Pfannenteil zur Verbindung mit einem zweiten Gestängeteil, wobei das Pfannenteil eine Pfanne und einen Pfannenkäfig zum Einsetzen in die Pfanne enthält, wobei der Pfannenkäfig eine das Kugelende aufnehmende Vertiefung hat, in die die Kugel eingesetzt werden kann, wenn der Käfig äußerlich nicht eingeschlossen ist, wobei der Käfig Rückhaltemittel hat, die mit einem ersten Gebilde an dem Pfannenteil in Eingriff bringbar sind, um den Käfig in einer unvollständig eingesetzten Stellung relativ zu der Pfanne zu halten, wobei in dieser Stellung das Kugelende in die Vertiefung eingesetzt oder herausgenommen werden kann, und mit einem zweiten Gebilde an dem Pfannenteil in Eingriff bringbar sind, um den Käfig in einer vollständig eingesetzten Stellung in der Pfanne zu halten, wobei in dieser Stellung der Käfig von dem Pfannenteil äußerlich eingeschlossen ist, um ein Lösen des Kugelendes aus der Vertiefung zu verhindern und somit das erste und zweite Gestängeteil zu verbinden, wobei ein Werkzeug mit einer zylindrische Öffnung, deren Innendurchmesser geringfügig größer oder gleich einem einhüllenden Kreis um äußere abgeschrägte Oberkanten der Rückhaltemittel ist, auf die Rückhaltemittel gedrückt wird, sodass deren formschlüssige Verbindung mit dem Pfannenteil gelöst wird und der Pfannenkäfig in die unvollständig eingesetzte Stellung geschoben wird, sodass das Kugelende aus der Vertiefung herausgenommen werden kann.

Im Folgenden werden Ausführungsbeispiele der Erfindung anhand der beiliegenden Zeichnungen erläutert. Dabei zeigen:
Fig. 1 den Kugelgelenkverbinder nach der Erfindung in einem auseinander gezogenen Zustand;
Fig. 2 den unvollständigen Zusammenbau des Kugelgelenks, wobei der Käfig in dem unvollständig eingesetzten Zustand ist;
Fig. 3 den Kugelgelenkverbinder, der als Teil eines Kupplungsbetätigungsvorrichtungsgestänges verwendet wird;
Fig. 4 eine Draufsicht des Kugelgelenkverbinders der Fig. 1;
Fig. 5, Fig. 6 und Fig. 7 Schnitte an den Linien A-A, B-B und C-C der Fig. 4;
Fig. 8, Fig. 9 und Fig. 10 Stufen des Zusammenbaues des Kugelgelenkverbinders;
Fig. 11, Fig. 12 und Fig. 13 Stufen der Zerlegung des Kugelgelenkverbinders;
Fig. 14 eine weitere Form eines Kugelgelenkverbinders nach der Erfindung in einem auseinander gezogenen Zustand;
Fig. 15 eine Draufsicht des Kugelgelenkverbinders der Fig. 14;
Fig. 16 und Fig. 17 Schnitte an den Linien A'-A' und B'-B' der Fig. 15;
Fig. 18 und Fig. 19 detailliertere perspektivische Ansichten der Pfanne des Verbinders der Fig. 4;
Fig. 20, Fig. 21 und Fig. 22 Stufen des Zusammenbaus des Kugelgelenkverbinders der Fig. 14; und
Fig. 23 und Fig. 24 Stufen der Zerlegung des Kugelgelenkverbinders der Fig. 14;
Fig. 25 ein erstes Ausführungsbeispiel eines Werkzeuges zur Demontage des Kugelgelenkverbinders;
Fig. 26 ein zweites Ausführungsbeispiel eines Werkzeuges zur Demontage des Kugelgelenkverbinders;
Fig. 27 bis Fig. 30 einzelne Stufen der Demontage des Kugelgelenkverbinders.

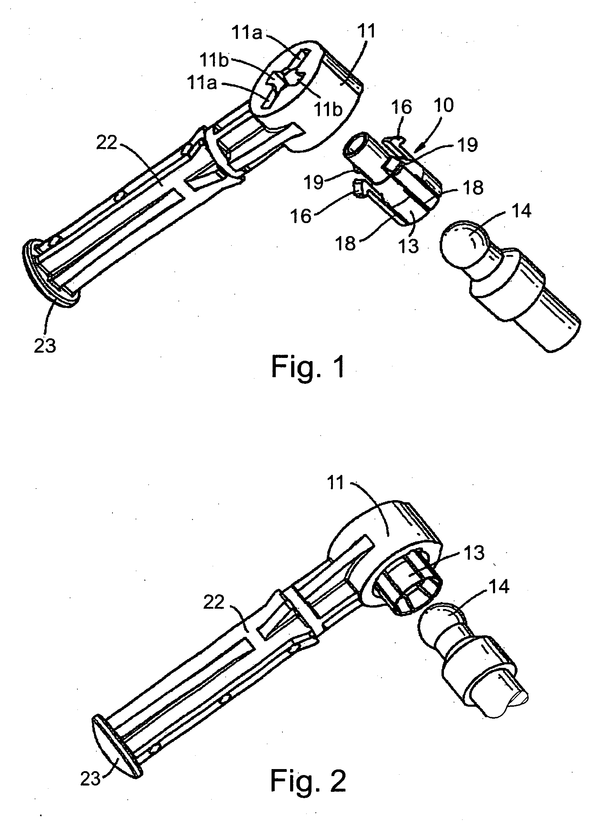

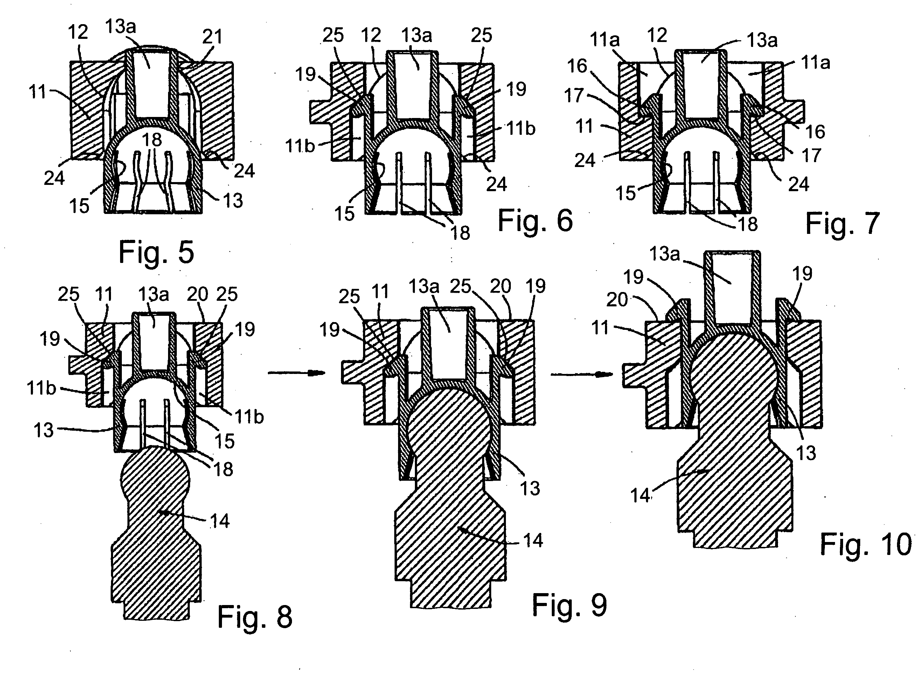

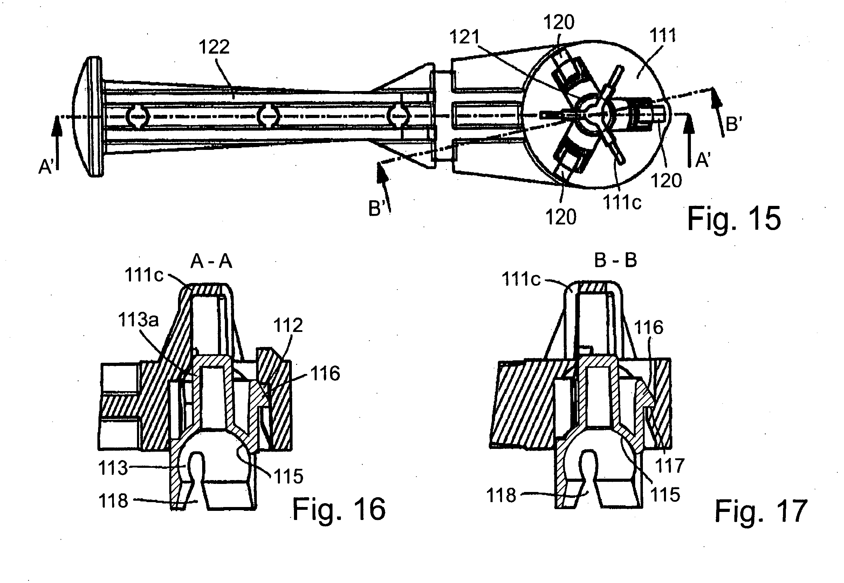

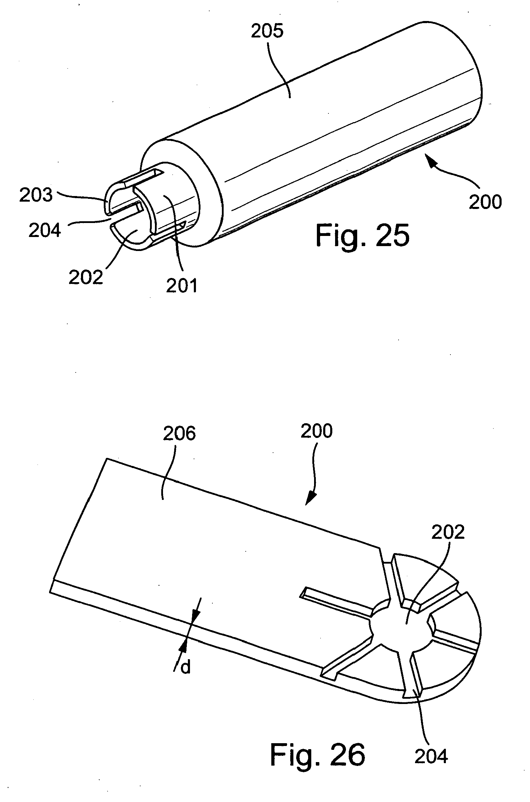

Anhand der Figuren 1 bis 24 wird zunächst ein Kugelgelenkverbinder erläutert, zu dessen Demontage die anhand der Figuren 25 bis 30 erläuterten Ausführungsbeispiele von Werkzeugen dienen. Wie in den Zeichnungen gezeigt, umfasst der Kugelgelenkverbinder 10 der Erfindung ein Pfannenteil 11, das eine darin gebildete Pfanne 12 hat, einen Pfannenkäfig 13 zum Einsetzen in die Pfanne 12 und ein Kugelende 14 zum Einsetzen in eine Vertiefung 15, die in dem Käfig 13 gebildet ist, auf. Das Pfannenteil 11 ist einstückig mit einer Kolbenstösselstange 22 eines Kupplungsgeberzylinders 30 ausgebildet, der von einem Pedal 31, das das Kugelende 14 trägt, betätigt wird. Der Geberzylinder 30 ist über eine Leitung 32 mit einem Nehmerzylinder 33 verbunden, der einen Kupplungsbetätigungshebel 34 betätigt, der aus einem Kupplungsgehäuse 35 herausragt. Der Nehmerzylinder kann als Alternative einen konzentrischen Nehmerzylinder innerhalb des Gehäuses 35, der die Antriebswelle umgibt, umfassen. Der Käfig 13 hat ein erstes Paar von Rückhaltemitteln in Form von flexiblen Vorsprüngen 16, die mit einem ersten Gebilde in Form einer Schulter 17 an dem Pfannenteil (siehe Fig. 7) in Eingriff bringbar sind, um den Käfig in einer unvollständig eingesetzten Stellung in der Pfanne 12 zu halten. In dieser unvollständig eingesetzten Stellung gestatten in der Wand des Käfigs 13 gebildete Schlitze 18 dem Käfig, sich zu weiten, um das Einsetzen des Kugelendes 14 zu gestatten. Wenn der Käfig vollständig in die Pfanne 12 eingesetzt ist (siehe Fig. 10) greift ein zweites Paar flexibler Vorsprünge 19 hinter ein zweites Gebilde in Form einer Schulter 20, die an dem Pfannenteil gebildet ist, um das Käfigteil in der vollständig eingesetzten Stellung zu halten, in welcher es von den Wänden der Pfanne äußerlich eingeschlossen ist, um ein Lösen des Kugelgelenks aus der Vertiefung 15 zu verhindern. Der Käfig 13 enthält einen rohrförmigen Vorsprung 13a, der in ein Loch 21 in dem unteren Teil der Pfanne 12 eingreift. Der Vorsprung 13a wirkt als Führung, um die richtige Positionierung des Käfigs relativ zu der Pfanne 12 sowohl in der unvollständig als auch der vollständig eingesetzten Stellung des Käfigs sicherzustellen.

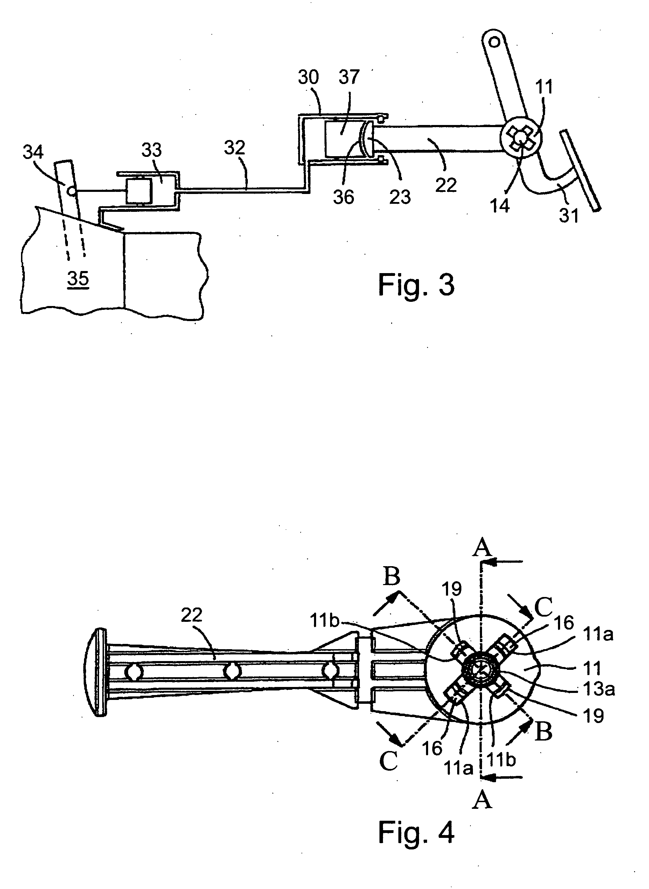

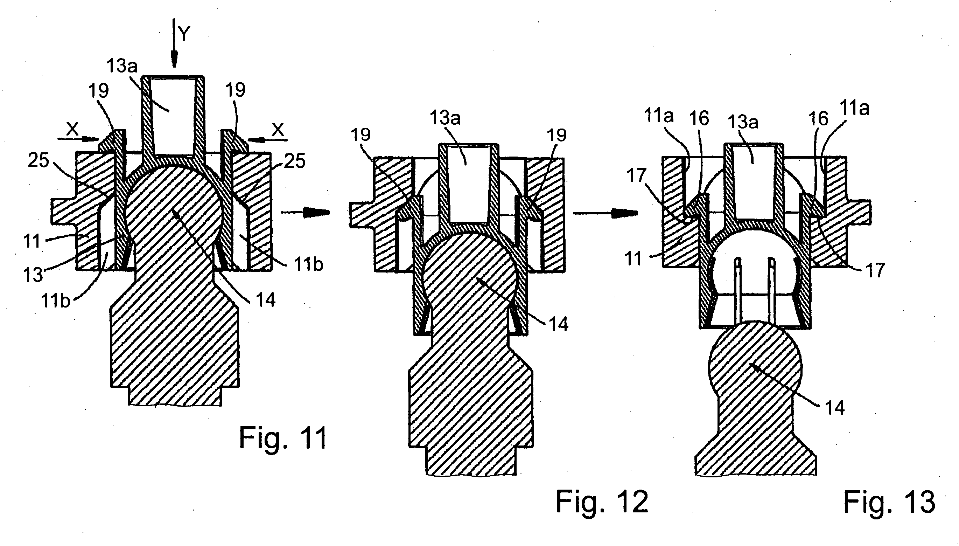

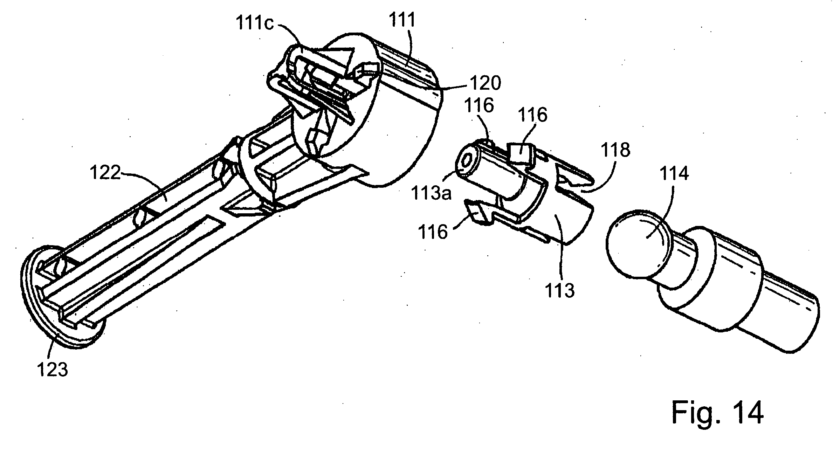

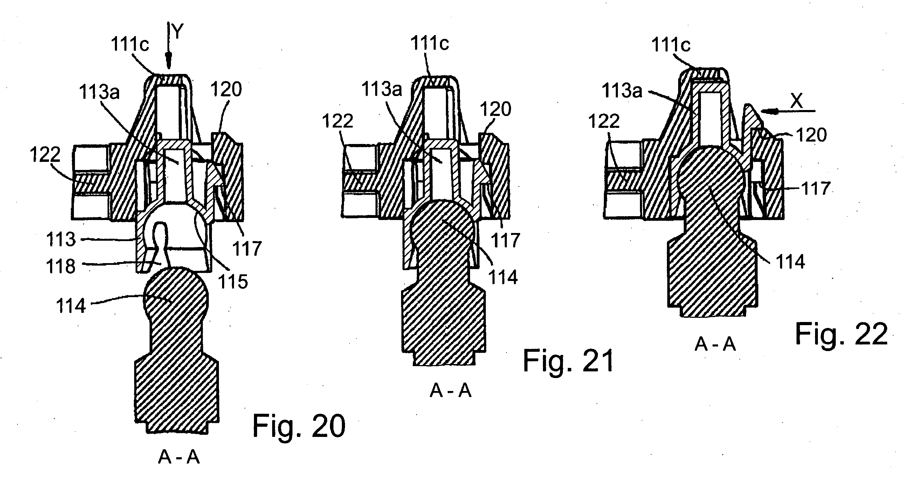

Wie in den Fig. 1, Fig. 2 und Fig. 4 gezeigt, hat die Stösselstange 22 des Geberzylinders einen teilkugelförmigen konvexen Endabschnitt 23, der mit einer ähnlich geformten Vertiefung 36 in dem zugehörigen Geberzylinderkolben 37 zusammenwirkt, um eine gelenkige Verbindung der Stösselstange über einen begrenzten Winkel relativ zu dem Kolben zu gestatten. Dies ist schematisch in Fig. 3 gezeigt. Die Verbindung des Kugelendes 14 mit der Stösselstange 22 wird wie folgt vervollständigt. Der Käfig 13 wird in die Pfanne 12 eingeführt, wenn die flexiblen Vorsprünge 16 nach innen weg gebogen werden, wenn sie sich entlang der ersten engeren Teile der Schlitze 11a bewegen, die eine sich verjüngende Einführung 24 haben, und sich die flexiblen Vorsprünge 19 unverbogen entlang des ersten breiteren Teiles der Schlitze 11 b bewegen. Das Einsetzen des Käfigs geht weiter, bis die flexiblen Vorsprünge 16 hinter die erste Schulter 17 an dem Pfannenteil 11 schnappen (siehe Fig. 7). An dieser Stelle berühren die zweiten flexiblen Vorsprünge 19 eine weitere sich verjüngende Einführung 25 an dem Beginn des zweiten Teiles der Schlitze 11b (siehe Fig. 6), um eine ausdrückliche Rückmeldung an den Zusammenbauer zu geben, dass die erste Stufe des Einsetzens vollendet wurde. Die Verbindung ist dann in dem unvollständig zusammengebauten Zustand, der in Fig. 2 gezeigt ist. Dies ist die Lage, in der die Kolbenstange und der zugehörige Geberzylinder normalerweise an den Fahrzeughersteller geliefert werden. Die Verbindung des Gestänges wird auf der Fahrzeugmontagestrasse durch Einsetzen des Kugelendes 14 in die Vertiefung 15, wie in den Fig. 8 und Fig. 9 gezeigt, vervollständigt. Dieses Einsetzen wird durch die Schlitze 18 gestattet. Das Kugelende und der Käfig 13 werden dann weiter in die Pfanne 12 gedrückt (siehe Fig. 10), wobei die zweiten flexiblen Vorsprünge 19 nach innen gebogen werden, wenn sie sich entlang des engeren zweiten Teiles des Schlitzes 11 b bewegen, bis sie hinter die zweite Schulter 20 schnappen, und sich die Vorsprünge 19 unverbogen entlang des breiteren zweiten Teiles der Schlitze 11a bewegen. Wenn die Vorsprünge 19 hinter die Schulter 20 eingeschnappt sind, sind die Wände des Käfigs 13 nicht in der Lage, wegen des Kontaktes mit Teilen des umgebenden Pfannenteiles 11 sich nach außen zu weiten, und somit wird das Kugelende 14 in der Vertiefung 15 festgehalten. Die Gestängeverbindung wurde somit vervollständigt. Das Kugelgelenk kann dadurch zerlegt werden (siehe Fig. 11 bis Fig. 13, indem man radial nach innen auf die zweiten flexiblen Vorsprünge 19 (siehe Pfeile X in Fig. 11) drückt und gleichzeitig nach unten auf den rohrförmigen Vorsprung 20 (siehe Pfeil Y in Fig. 11) drückt und somit den Käfig in die unvollständig eingesetzte Stellung, die in Fig. 12 gezeigt ist, drückt. Wie zuvor angegeben, kann in diesem Zustand das Kugelende 14 in der Vertiefung 15, wie in Fig. 13 gezeigt, gelöst werden, und somit das Zerlegen des Kugelgelenks vervollständigt werden. Die Fig. 14 bis Fig. 24 zeigen Einzelheiten einer alternativen Form der Erfindung, bei der nur drei flexible Vorsprünge 116 vorgesehen sind, von denen jeder mit dem ersten und dem zweiten Gebilde an dem Pfannenteil 111 zusammenwirkt, um den Käfig 113 in der unvollständig und vollständig eingesetzten Stellung zu halten. Die Pfanne 112 ist mit drei Paaren von ersten Schultern 117 versehen, die erste Gebilde bilden, an denen die flexiblen Vorsprünge 116 angreifen können. Drei zweite Gebilde in Form von Schultern 120 sind an dem Pfannenteil 111 auch vorgesehen. Wieder greift ein rohrförmiger Vorsprung 113a, der an dem Käfig 113 gebildet ist, in ein Loch 121 in dem unteren Teil der Pfanne 112 ein. Über dem Loch 121 ist ein Käfig 111 c vorgesehen, den der Zusammenbauer des Kugelgelenkverbinders verwenden kann, um in Richtung des Pfeiles Y von Fig. 20 nach unten zu drücken.

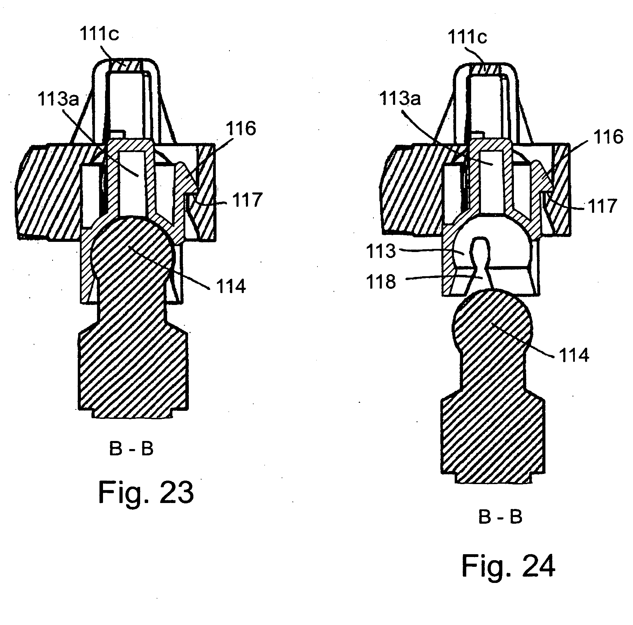

Die Fig. 20, Fig. 21 und Fig. 22 zeigen die Zusammenbauabfolge des Kugelgelenkverbinders. Der Käfig 113 wird in der unvollständig eingesetzten Stellung, die in Fig. 20 gezeigt ist, durch den Eingriff der flexiblen Vorsprünge 116 mit den Schultern 117 gehalten. Das Kugelende 114 wird dann in die Vertiefung 115, wie in Fig. 21 gezeigt, eingesetzt und das Kugelende und der Käfig 113 werden dann weiter in die Pfanne 112 gedrückt, bis die flexiblen Vorsprünge 116 an den Schultern 120, wie in Fig. 22 gezeigt, angreifen. Das Kugelende kann aus der Pfanne 112 gelöst werden, indem man auf die flexiblen Vorsprünge 116 in Richtung des Pfeiles X in Fig. 22 drückt, wodurch es dem Käfig 113 erlaubt wird, sich in die unvollständig eingesetzte Stellung, die in Fig. 23 gezeigt ist, zu bewegen. In der Stellung der Fig. 23 kann das Kugelende aus der Vertiefung 115 entfernt werden, da sich der Käfig aufgrund der Schlitze 118 weiten kann, die nicht mehr in der Pfanne 112 eingeschlossen sind. Somit funktioniert die in den Fig. 14 bis Fig. 24 gezeigte alternative Konstruktion im wesentlichen auf die gleiche Art und Weise, wie die vorherige Konstruktion, aber die flexiblen Vorsprünge 116 greifen sowohl an den ersten Gebilden 117 als auch den zweiten Gebilden 120 des Pfannenteiles 111 an. Der Käfig 111 c, der in dem oben beschriebenen Ausführungsbeispiel bereitgestellt ist, kann auch bei dem ersten Ausführungsbeispiel der Erfindung verwendet werden, und ist dabei hilfreich, der Bedienungsperson zu gestatten, eine Kraft auf das Pfannenteil 111 auf zubringen, um an den ersten Gebilden 17 oder 117 und den zweiten Gebilden 20 oder 120 anzugreifen, während dem flexiblen Vorsprung 1116 gestattet wird, leicht mit den Fingern der Bedienungsperson gelöst zu werden, da der Käfig die flexiblen Vorsprünge 116 nicht abdeckt, wenn sie in Eingriff mit den Schultern 120 sind. Wie erkannt werden dürfte, hat das Kugelgelenk der Erfindung eine Anzahl von Vorteilen. Zuerst kann das Pfannenteil einstückig mit dem zugehörigen Gestängeteil (z.B. der Kolbenstösselstange) ausgebildet werden. Der Käfig und das Pfannenteil können an den Kunden in einem unvollständig zusammengebauten Zustand geliefert werden, wobei das Käfigteil gefangen gehalten wird, so dass es während der Lieferung nicht verloren gehen kann. Der Zusammenbauvorgang ist auch einfach, da er ein Zweistufenvorgang ist, der keinen Einsatz von irgendeinem weiteren Werkzeug erfordert. Die Anordnung ist robust und kann nicht wegen des Zusammenwirkens des rohrförmigen Vorsprunges 13a oder 113a und dem Loch 21 oder 121 in dem unteren Teil der Pfanne 12 oder 112 unter einer Fehlausrichtung leiden. Obgleich die Erfindung in Bezug auf ein Gestänge für eine Kupplungsbetätigungsvorrichtung beschrieben wurde, ist sie nicht auf einen solchen Einsatz beschränkt und kann zum Verbinden von zwei beliebigen Teilen irgendeines Gestänges verwendet werden.

Fig. 25 zeigt ein erstes Ausführungsbeispiel eines Werkzeuges 200 zur Demontage der anhand der Fig. 1 bis 24 dargestellten Kugelgelenkverbinders 10. Das Werkzeug 200 umfasst einen zylindrischen Aufsatzkörper 201, in den eine zylindrische Öffnung 202 eingebracht ist.

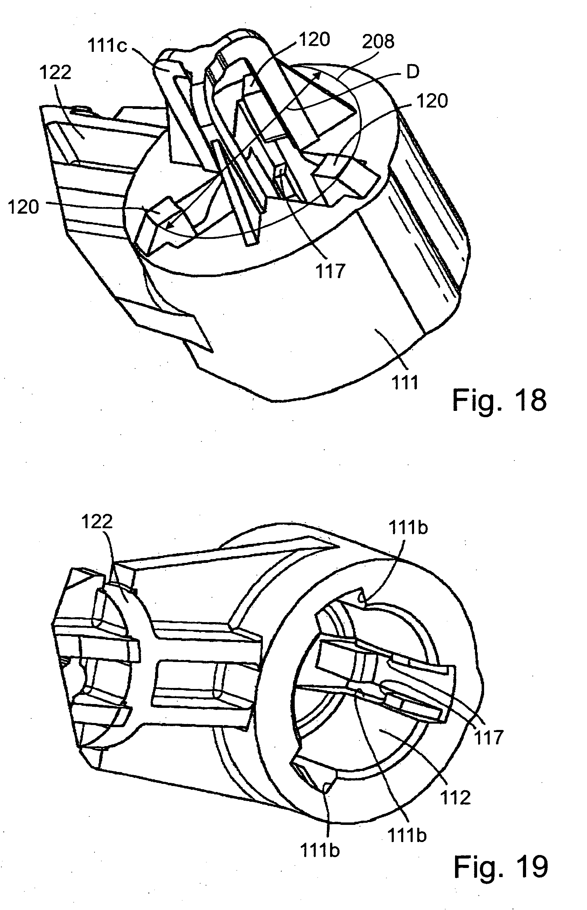

Der zylindrische Aufsatzkörper 201 hat somit die Form eines Hohlzylinders. In eine zylinderförmige Wandung 203 des Aufsatzkörpers 201 sind mehrere radial sich erstreckende Ausnehmungen in Form von Öffnungen 204 eingebracht. Die Öffnungen 204 sind ähnlich einer Nut von der Stirnseite des Aufsatzkörpers eingebracht. Im Ausführungsbeispiel der Fig. 25 sind drei Öffnungen 204 in den Aufsatzkörper 201 eingebracht, wobei diese jeweils in einem Winkel von 120° zueinander angeordnet sind und mit der Anordnung des Käfigs 111 c, wie diese z.B. in Fig. 18 zu erkennen ist, korrespondieren. Hier kann aber auch eine andere Anzahl an Einschnitten 204 je nach Ausführung des Käfigs 111 c eingebracht werden. Die Einschnitte 204 korrespondieren, wie nachfolgend dargestellt wird, mit den radial sich erstreckenden Käfigteilen des Käfigs 111c, die bei Verwendung des Werkzeuges in den Ausschnitten 204 zu liegen kommen. Auf der der Stirnseite abgewandten Seite des Aufsatzkörpers 201 ist ein zylinderförmiges Griffstück 205 angeordnet, das der manuellen Handhabung des Werkzeuges 200 dient.

Fig. 26 zeigt eine alternative Ausführungsform eines Werkzeuges 200. Dieses umfasst eine ebene Platte 206, die an einer Seite halbkreisförmig abgerundet ist. An der Seite mit der halbkreisförmigen Abrundung ist die zylindrische Öffnung 202 eingebracht. Von der Öffnung 202 aus erstrecken sich radial Ausnehmungen 204, die z.B. wie in Fig. 26 dargestellt Nute sein können, die nur über einen Teil der Dicke d der Platte 206 eingebracht sind. Die Nute können aber auch ausgehend von der zylindrischen Öffnung 202 radial über die gesamte Dicke d eingebracht werden, so dass zwischen den einzelnen Nuten nur noch im Außenbereich der Platte Stege übrig bleiben.

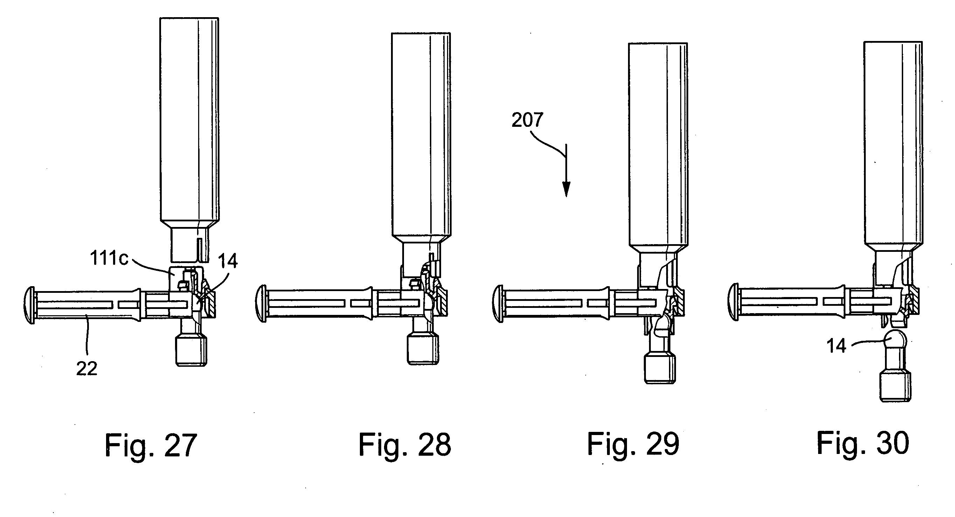

Die Fig. 27 bis 30 zeigen einen Demontagevorgang. Dargestellt ist die Stößelstange 22, die mit dem Kugelende 14 verbunden ist. In dem in Fig. 27 dargestellten ersten Schritt wird das Werkzeug 200 von der Seite des Käfigs 111c aufgesetzt. Die Wandung der zylindrischen Öff nung 202 liegt dabei an der mit Schrägen versehenen Vorsprüngen 19 an. Der Innendurchmesser der Öffnung 202 entspricht dabei dem Außendurchmesser D eines einhüllenden Kreises 208 der Vorsprünge 19. Bei einem weiteren Aufdrücken des Werkzeuges 200, wie dies in Fig. 28 dargestellt ist, werden die Vorsprünge 16 bzw. 19 radial nach innen gedrückt, so dass die Schnappverbindung der Schultern 17 aufgehoben wird und der Kugelgelenkverbinder 10 wie in Fig. 29 dargestellt in Richtung des Pfeils 207 gedrückt wird. Dadurch wird die formschlüssige Verbindung zwischen dem Kugelende 14 und dem Kugelgelenkverbinder 10 gelöst, so dass diese wie in Fig. 30 dargestellt auseinander gezogen werden können.

## Patentansprüche

1. Werkzeug (200) zur Demontage eines Kugelgelenkverbinders (10) für ein Betätigungsgestänge, mit einem Kugelende (14) zur Verbindung mit einem ersten Gestängeteil, einem Pfannenteil (11) zur Verbindung mit einem zweiten Gestängeteil, wobei das Pfannenteil (11) eine Pfanne (12) und einen Pfannenkäfig (13) zum Einsetzen in die Pfanne enthält, wobei der Pfannenkäfig eine das Kugelende aufnehmende Vertiefung (15) hat, in die die Kugel (14) eingesetzt werden kann, wenn der Käfig äußerlich nicht eingeschlossen ist, wobei der Käfig Rückhaltemittel (16, 19) hat, die mit einem ersten Gebilde (17) an dem Pfannenteil in Eingriff bringbar sind, um den Käfig in einer unvollständig eingesetzten Stellung relativ zu der Pfanne zu halten, wobei in dieser Stellung das Kugelende in die Vertiefung eingesetzt oder herausgenommen werden kann, und mit einem zweiten Gebilde (20) an dem Pfannenteil in Eingriff bringbar sind, um den Käfig (15) in einer vollständig eingesetzten Stellung in der Pfanne zu halten, wobei in dieser Stellung der Käfig von dem Pfannenteil äußerlich eingeschlossen ist, um ein Lösen des Kugelendes aus der Vertiefung zu verhindern und somit das erste und zweite Gestängeteil zu verbinden, **dadurch gekennzeichnet, dass** das Werkzeug (200) eine zylindrische Öffnung (202) umfasst, deren Innendurchmesser geringfügig größer oder gleich einem einhüllenden Kreis (208) um äußere abgeschrägte Oberkanten der Rückhaltemittel (16, 19) ist.

2. Werkzeug nach Anspruch 1, wobei der Kugelgelenkverbinder (10) einen Käfig (111c) umfasst, der auf der Außenseite des Pfannenteiles (111) gebildet ist, **dadurch gekennzeichnet, dass** sich von der zylindrischen Öffnung radiale Ausnehmungen zur Aufnahme des Käfigs (111 c) erstrecken.

3. Werkzeug nach Anspruch 1 oder 2, **dadurch gekennzeichnet, dass** die zylindrische Öffnung (202) in einen zylindrischen Aufsatzkörper (201) eingebracht ist.

4. Werkzeug nach Anspruch 3, **dadurch gekennzeichnet, dass** der Aufsatzkörper (201) an einem Griffstück (205) angeordnet ist.

5. Werkzeug nach Anspruch 1 oder 2, **dadurch gekennzeichnet, dass** die zylindrische Öffnung (202) in eine Platte (206) eingebracht ist.

6. Verfahren zur Demontage eines Kugelgelenkverbinders (10) für ein Betätigungsgestänge, mit einem Kugelende (14) zur Verbindung mit einem ersten Gestängeteil, einem Pfannenteil (11) zur Verbindung mit einem zweiten Gestängeteil, wobei das Pfannenteil (11) eine Pfanne (12) und einen Pfannenkäfig (13) zum Einsetzen in die Pfanne enthält, wobei der Pfannenkäfig eine das Kugelende aufnehmende Vertiefung (15) hat, in die die Kugel (14) eingesetzt werden kann, wenn der Käfig äußerlich nicht eingeschlossen ist, wobei der Käfig Rückhaltemittel (16, 19) hat, die mit einem ersten Gebilde (17) an dem Pfannenteil in Eingriff bringbar sind, um den Käfig in einer unvollständig eingesetzten Stellung relativ zu der Pfanne zu halten, wobei in dieser Stellung das Kugelende in die Vertiefung eingesetzt oder herausgenommen werden kann, und mit einem zweiten Gebilde (20) an dem Pfannenteil in Eingriff bringbar sind, um den Käfig (15) in einer vollständig eingesetzten Stellung in der Pfanne zu halten, wobei in dieser Stellung der Käfig von dem Pfannenteil äußerlich eingeschlossen ist, um ein Lösen des Kugelendes aus der Vertiefung zu verhindern und somit das erste und zweite Gestängeteil zu verbinden, **dadurch gekennzeichnet, dass** ein Werkzeug (200) mit einer zylindrische Öffnung (202), deren Innendurchmesser geringfügig größer oder gleich einem einhüllenden Kreis um äußere abgeschrägte Oberkanten der Rückhaltemittel (16, 19) ist, auf die Rückhaltemittel (16, 19) gedrückt wird, sodass deren formschlüssige Verbindung mit dem Pfannenteil (11) gelöst wird und der Pfannenkäfig (13) in die unvollständig eingesetzte Stellung geschoben wird, sodass das Kugelende aus der Vertiefung herausgenommen werden kann.
